(19) Europäisches Patentamt
European Patent Office
Office européen des brevets

(11) **EP 0 829 550 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(21) Anmeldenummer: **97890184.1**

(22) Anmeldetag: **15.09.1997**

(51) Int Cl.⁶: **C22B 7/04**, C22B 7/02, C21C 5/48, C21C 5/46, C21B 3/04, C21B 11/00, B09B 3/00

(54) **Verfahren zum Aufarbeiten von Verbrennungsrückständen in einem mehrstufigen Metallbad-Konverter**

Method of processing incineration residues in a multi-stage metal bath converter

Procédé pour le traitement de résidus d'incinération dans un convertisseur de métal liquide du type à multiples compartiments

(84) Benannte Vertragsstaaten:
**AT BE DE FR GB IT**

(30) Priorität: **17.09.1996 AT 54896**

(43) Veröffentlichungstag der Anmeldung:
**18.03.1998 Patentblatt 1998/12**

(73) Patentinhaber: **"HOLDERBANK" Financière Glarus AG**
**8750 Glarus (CH)**

(72) Erfinder: **Edlinger, Alfred, Dipl.-Ing.**
**5400 Baden (CH)**

(74) Vertreter: **Haffner, Thomas M., Dr.**
**Patentanwalt,**
**Haffner, Thomas M., Dr.,**
**Schottengasse 3a**
**1014 Wien (AT)**

(56) Entgegenhaltungen:
EP-A- 0 707 083          EP-A- 0 714 860
WO-A-96/10097           WO-A-96/24696
DE-C- 4 442 362

## Beschreibung

Die Erfindung bezieht sich auf ein Verfahren zum Aufarbeiten von Verbrennungsrückständen bzw. Schlacken aus Müllverbrennungsanlagen oder Stahlwerksschlacken in einem Konverter, bei welchem die schmelzflüssige Schlacke mit einem Metallbad umgesetzt wird, wobei Kohlenstoff und Sauerstoff in das Metallbad eingedüst werden.

Aufarbeitungsverfahren, bei welchen Schlaken mit einem Metallbad umgesetzt werden, wobei auf diese Weise eine entsprechende Reduktion metallischer Anteile aus den Schlacken erfolgreich durchgeführt werden konnte, wurden bereits vorgeschlagen (siehe u.a. WO-A-96/10097, WO-A-96/2496, EP-A-0 714 860 und EP-A-0 707 083). Bei den bisher vorgeschlagenen Verfahren wurde das Reduktionspotential des Metallbades durch geeignete Maßnahmen gesteuert, wobei hiefür in erster Linie das Einblasen von Kohlenstoff unter gleichzeitigem Einblasen von Sauerstoff über Unterbaddüsen vorgeschlagen wurde.

In entsprechenden Versuchen wurde allerdings eine relativ hohe Staubauswurfrate und damit relativ hohe Eisenverluste beobachtet. Der Konverterauswurf wurde bei konventionellen Betrieben der vorgeschlagenen Verfahren mit 10 bis 15 Gew.% des gesamten Konverterinhaltes festgestellt, wodurch ein erheblicher Aufwand für die nachfolgende Abgasreinigung erforderlich war.

Neben den realtiv hohen Eisenverlusten hat sich gezeigt, daß die Wirtschaftlichkeit des Verfahrens nur dann wesentlich gesteigert werden kann, wenn es gelingt, den Kohlenstoff- und Sauerstoffbedarf zu minimieren und die thermische Effizienz zu erhöhen.

Die Erfindung zielt nun darauf ab, ein Verfahren der eingangs genannten Art dahingehend weiterzubilden, daß der Kohlenstoff- und Sauerstoffbedarf wesentlich verringert wird und gleichzeitig die Konverterauswurfrate herabgesetzt wird. Zur Lösung dieser Aufgabe besteht das erfindungsgemäße Verfahren im wesentlichen darin, daß der Konverter in drei aneinander angrenzende und in offener Verbindung miteinander stehende Bereiche unterteilt wird, wobei der Schlackenaufgabe benachbart ein Nachverbrennungsraum mit wenigstens einer auf das Schlackenbad gerichteten Lanze für eine Nachverbrennung angeordnet ist, über welche eine zirkulierende Strömung oberhalb des Schlackenbades aufgebaut wird, daß an die Nachverbrennungszone anschließend ein Metallbadsumpf zur Umsetzung des Metallbades mit der Schlacke und daß anschließend ein Absetzbereich ausgebildet wird, aus welchem die heißen Verbrennungsabgase abgezogen werden und die Schlackenschmelze abgezogen wird. Durch die erfindungsgemäße Ausbildung eines Nachverbrennungsraumes in offener Verbindung mit der Reduktionszone über dem Metallbad und dem Absetzbereich gelingt durch geeignete Strömungsausbildung ein hohes Maß an Zirkulation von Schlackenpartikeln in der Nachverbrennungszone aufrechtzuerhalten und gleichzeitig die thermische Effizienz zu erhöhen. Die Zirkulation von Schwebepartikeln im Nachverbrennungsraum verhindert, daß diese Partikel aus dem Gasraum über dem Absetzbereich abgezogen werden, da sie im Kreislauf immer wieder auf die Oberfläche der Schlackenschmelze zurückgeführt werden. Das erfindungsgemäße Verfahren wird daher mit Vorteil so durchgeführt, daß die in den Nachverbrennungsraum mündenden Lanzen als wassergekühlte Lanzen mit einer aufgesetzten Laval-Düse ausgebildet sind und daß mit dem über die Lanzen auf das Schlackenbad aufgeblasenen Sauerstoff für die Nachverbrennung über Injektorwirkung eine um die Achse der Lanze zentrierte Kreislaufströmung des Partikelstromes über dem Schlackenbad eingestellt wird. Über die wassergekühlten Lanzen mit der aufgesetzten Laval-Düse kann die gewünschte Kreislaufströmung des Partikelstromes über dem Schlackenbad in der Nachverbrennungszone aufrechterhalten und eingestellt werden, wobei ein zusätzlicher Schutz der Lanze durch Ausbildung einer Schlackentropfenhaube am Lanzenkopf gewährleistet ist. Der Wärmeübergang auf die beschleunigt zurückfallenden Schlackentröpfchen wird hiebei optimiert und es ist ein hoher Wärmeübergang von den überhitzten Schlackentröpfchen auf das Schlackenbad sichergestellt, da im Nachverbrennungsraum maximale Temperaturen von ca. 2400° C auftreten. Eine extrem beschleunigte Inversflamme trifft hiebei mit hohem Impuls auf das Schlackenbad auf, was zu einer zusätzlichen Erhöhung des Wärmeüberganges führt. Neben dem wesentlichen Vorteil des effizienten Schutzes der Lanze durch einen Schlackentropfenbelag wird gleichzeitig auch der Vorteil erzielt, daß die Feuerfestzustellung weniger beansprucht wird. Die im Kreislauf geführten Teilchen gelangen nämlich nicht an die Feuerfestauskleidung und bewirken auf diese Weise einen wesentlich geringeren Verschleiß. Die Lanzeninjektorwirkung erlaubt es Staub und Heißadditive anzusaugen, welche in den Brennfleck geführt und in der Schlackenschmelze schnell aufgelöst und eingebunden werden. Da durch die übrigen Verfahrensparameter die Ausbildung von Eisentröpfchen im Gasraum weitestgehend hintangehalten werden kann, kann auch eine Reoxidation von Eisen bzw. von Chrom oder Vanadium verhindert werden. Durch die Verwendung von Sauerstoff wird die Gasbelastung des Gesamtsystems verringert und auf diese Weise auch eine geringere Staubbelastung erzielt.

Wie bereits erwähnt kann das erfindungsgemäße Verfahren mit Vorteil so durchgeführt werden, daß über die Aufblaslanzen Filterstaub aus der Abgasreinigung der Konverterabgase rückgeführt wird. Im Fall der Verwendung von Filterstäuben kann dann, wenn diese Filterstäube einen hohen Resteisengehalt aufweisen, das Verfahren so geführt werden, daß eine Teilmenge der Filterstäube mit hohem Resteisengehalt unmittelbar in das Metallbad eingedüst wird, sodaß eine vollständige Rückgewinnung des ursprünglich ausgetragenen Eisens gelingt.

Eine weitere Verringerung der Umweltbelastung läßt sich dadurch erzielen, daß die in einem Heißzyklon abgeschiedenen Feststoffe wiederum rückgeführt werden. Mit Vorteil wird das Verfahren hiebei so geführt, daß in den Nachverbrennungsraum in einem Heißzyklon abgeschiedene Feststoffe aus den Konverterabgasen rückgeführt werden. Eine derartige achsparallel zu der Sauerstofflanze gesonderte Einbringung der abgekühlten Feststoffe hat zur Folge, daß diese Feststoffe in die Kreislaufströmung gesaugt werden und auf die Weise effizient in das Schlackenbad rückgeführt werden. Gegebenenfalls für gewünschte Schlackenviskosität oder Schlackenzusammensetzung wünschenswerte Additive können im Rahmen des erfindungsgemäßen Verfahrens zur Kühlung der ausgetragenen Feststoffe verwendet werden und gemeinsam mit diesen der Schlacke aufgegeben werden. Mit Vorteil wird das Verfahren hiebei so durchgeführt, daß die Konverterabgase mit Additiven, wie $Al_2O_3$, $SiO_2$ oder Schlackengranulaten in einem Schwebegas- oder Wirbelschichtwärmetauscher gekühlt werden und nachfolgend aus dem Zyklon abgeschieden und auf das Schlackenbad rückgeführt werden. Die Additive können hiebei im Schwebegas-Wärmetauscher im Gleichstrom oder in einem Wirbelschicht-Wärmetauscher als kalte Additive mit einer Körnung von 0,5 bis 3,5 mm aufgegeben werden, wobei kaltes Additiv sowie gegebenenfalls gekühlte im Heißzyklon abgeschiedene Feststoffe den Konverterauswurf schlagartig abkühlen. Der Konverterauswurf befindet sich üblicherweise noch in weitgehend flüssigen bzw. teigigen Zustand, wobei unmittelbar ein Mischstaub mit den gewünschten Additiven mit einer Temperatur von etwa 750° C ausgebildet wird, welcher problemlos in einem Heißzyklon abgetrennt werden kann.

Sowohl der Additivzusatz als auch die Rückführung von gekühlten aus dem Zyklon abgetrennten Feststoff erlaubt es die Temperaturen im Zyklon auf 750° C zu beschränken, wobei Additive insbesondere dann von Vorteil sind, wenn hochchromhaltige Stahlschlacken in dünnflüssige, chromfreie, synthetische Hochofenschlacken für die Zementherstellung umgewandelt werden sollen. Auch im Falle von hochvanadiumhaltigen Stahlschlacken gelingt es, in der Reduktionszone eine konzentrierte Vanadiumlegierung zu gewinnen, wobei diese Legierung anschließend vanadiumfrei verschlackt wird und im wesentlichen kohlenstoffreies Ferro-Vanadium erhalten werden kann.

Um den Nachverbrennungsgrad und damit die thermische Effizienz weiter zu erhöhen, wird mit Vorteil so vorgegangen, daß eine Teilmenge des CO und $H_2$-haltigen gereinigten Konverterabgases über Bqdendüsen in das Schlackenbad im Nachverbrennungsraum eingedüst wird, wobei ein besonders effizienter Temperaturübergang dadurch erzielt werden kann, daß die Bodendüsen in der Nachverbrennungszone mit einem Druck zwischen 4 und 12 bar betrieben werden.

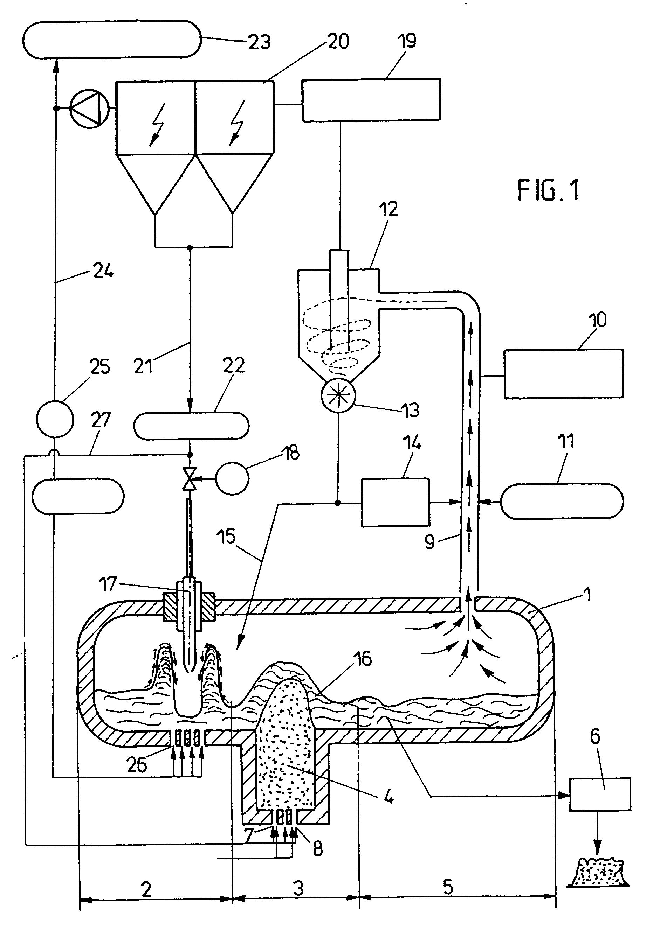

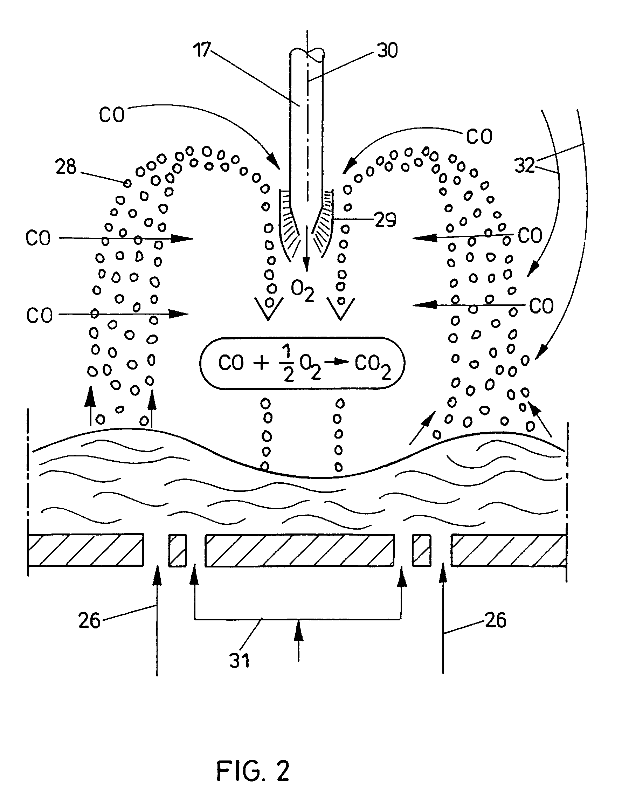

Die Erfindung wird nachfolgend anhand einer in der Zeichnung schematisch dargestellten Ausführungsform einer für die Durchführung des erfindungsgemäßen Verfahrens geeigneten Vorrichtung näher erläutert. In dieser zeigen Fig. 1 eine schematische Gesamtdarstellung der Vorrichtung und Fig. 2 eine vergrößerte Darstellung der sich im Nachverbrennungsraum ergebenden Verhältnisse.

In Fig. 1 ist mit 1 ein Konverter bezeichnet, welcher als Eisenbadreaktor ausgeführt ist. Der Konverter ist hiebei in drei Zonen unterteilt, wobei eine erste Zone 2 der Nachverbrennung und damit der Verbesserung der Energiebilanz dient. In einer anschließenden Zone 3 erfolgt die Reduktion über einem Eisenbad 4, worauf anschließend eine Absetzzone 5 vorgesehen ist, aus welcher die Schlackenschmelze abgezogen werden kann und einer Granulation 6 zugeführt werden kann.

Das Eisenbad 4 in der Reduktionszone wird über Bodendüsen 7 und 8 mit Kohlenstoff sowie Sauerstoff, Luft, $CO_2$, Wasserdampf und gegebenenfalls Methangas beaufschlagt, wodurch das Reduktionspotential des Eisenbades 4 entsprechend eingestellt wird. Je nach Ausgangszusammensetzung der Schlacken und insbesondere je nach dem Chromanteil dieser Schlacken wird das Eisenbad 4 aufgechromt und es kann auf diese Weise Ferro-Chromium-Carburé gewonnen werden.

Aus der Absetzzone 5 des Konverters 1 werden die heißen Abgase bei Temperaturen von etwa 1700° C über eine Leitung 9 ausgetragen. Die Abgase werden einem Schwebegas-Wärmetauscher 10 zugeführt, wobei an dieser Stelle Additive, insbesondere $Al_2O_3$, $SiO_2$ oder Müllverbrennungsschlackengranulat, welches bereits einer ersten Aufarbeitung unterworfen wurde, aus einem Bunker 11 aufgegeben werden. Die Feinpartikel im Abgas werden hiebei auf Temperaturen von etwa 750° C gekühlt und gelangen in einen Zyklonabscheider 12. Die aus dem Zyklonabscheider 12 über eine Zellradschleuse 13 ausgebrachten Feststoffe können über einen Rückgutkühler 14 geführt werden und gleichfalls ebenso wie die Additive aus dem Bunker 11 dem Schwebegas-Wärmetauscher zugeführt werden. Die Feststoffe werden in der Folge über eine Leitung 15 der Nachverbrennungszone rückgeführt und auf die flüssige Stahlschlacke aufgebracht. Die Stahlschlacke ist hiebei mit 16 bezeichnet.

In den Nachverbrennungsraum mündet eine wassergekülte Sauerstofflanze 17, wobei Sauerstoff aus einer Sauerstoffquelle 18 zugeführt wird.

Den Zyklonabscheider 12 verlassen heiße Restgase, welche zunächst über einen Heißgaskühler 19 geführt werden, worauf sie einem Filter 20 zugeführt werden. Der Filterstaub kann über eine Leitung 21 ausgetragen werden und in einem Speicher 22 gesammelt werden. Aus diesem Speicher 22 kann der Filterstaub dem Sauerstoff der Sauerstofflanzen beigement werden und in die Nachverbrennungszone des Konverters 1 rückgeführt werden. Ein wesentlicher Anteil des Restgases, welcher den Filter 20 verläßt, kann in der Folge einer Restgasverwertung 23 zugeführt werden, wobei mit Rücksicht auf den hohen Anteil von etwa 50 Vol.% CO und $H_2$ im Restgas hier noch ein hoher Brennwert zur Verfügung steht. Eine Teilmenge dieses Restgases gelangt über die Leitung 24 und einen Kompressor 25 mit einem Druck von zwischen 4 und 12 bar an Unterbaddüsen 26, welche in das Schlackenbad 16 in der Nachverbrennungszone 2 münden. Gemeinsam mit dem über die Sauerstofflanze 17 gebrachten Sauerstoff gelingt hier eine weitere Verbrennung unter intensiver Ausnutzung der thermischen Energie zum Erhitzen des Schlackenbades. Der Filter 20 kann bevorzugt als Sack- oder Schlauchfilter ausgebildet sein.

Für den Fall, daß ein Filterstaub mit hohem Eisengehalt anfällt, kann dieser hocheisenhältige Filterstaub über eine Leitung 27 den Bodendüsen 7 bzw. 8 unter dem Eisenbad 4 zugeführt werden, um auf diese Weise den metallischen Anteil nahezu vollständig rückzugewinnen.

In Fig. 2 sind die Strömungsverhältnisse im Nachverbrennungsraum verdeutlicht. Mit 17 ist wiederum die wassergekühlte Sauerstofflanze schematisch angedeutet, welche an ihrer Mündung eine Laval-Düse aufweist. Die wassergekühlte aus Edelstahl bestehende Lanze mit aufgesetzter Laval-Düse reicht in den dichtesten Bereich der aufströmenden Schlackenpartikel, welche mit 28 bezeichnet sind, hinein. An der wassergekühlten Lanze friert eine etwa 1 cm dicke Schlackenschicht auf, welche einen optimalen Schutz gegen Temperatureinwirkung und Abrasion darstellt. Dieser Schlackenpelz ist schematisch mit 29 bezeichnet. Durch den frei austretenden Sauerstoffstrom wird eine Injektorwirkung erzeugt, die den Schlackenpartikelstrom in Richtung der Lanzenachse 30 zentriert, wobei gleichzeitig Konverterabgas angesaugt wird. Über die Bodendüsen 26 werden wiederum Retourgas und gegebenenfalls geringe Mengen Kohlenstoff eingebracht, wobei zusätzlich über weitere Bodendüsen 31 geringe Mengen Sauerstoff eingebracht werden können. Die Schlackenschmelze wird über die Hochdruck-Unterbaddüsen 26 und 31 im Nachverbrennungsraum zu ca. 35 Gew.% in Form von Schlackentröpfchen mittels Retourgas in den Nachverbrennungsraum dispergiert, die durch eine besonders effiziente Nachverbrennung des gebildeten CO und $H_2$ zu 35 bis 60 % gelingt. Der Nachverbrennungsgrad ist hiebei wie folgt definiert:

$$\frac{CO_2 + H_2O}{CO + H_2 + CO_2 + H_2O}$$

Die Nachverbrennungswärme wird mittels Strahlung und Konvektion auf die Schlackenpartikel übertragen.

Die Heißadditive, wie sie durch Rückkühlung der Schwebstoffe aus dem Gasraum der Absetzzone abgezogen werden, gelangen, wie in Fig. 1 ersichtlich, über die Leitung 15 außerhalb der Achse 29 der Sauerstofflanze 17 in den Nachverbrennungsraum und strömen hier im Sinne der Pfeile 32 in die zirkulierende Gas- und Partikelströmung ein. Die Teilchen werden in den Kreisstrom einbezogen und auf das Schlackenbad rückgeführt, wodurch eine effiziente Umsetzung des Rückgutes und der Additive gelingt.

Durch die Zirkulation im Nachverbrennungsraum werden korrosive Partikel und Strahlungswärme von der Feuerfestauskleidung ferngehalten, sodaß die Standzeit der Feuerfestauskleidung erhöht wird.

## Patentansprüche

1. Verfahren zum Aufarbeiten von Verbrennungsrückständen bzw. Schlacken aus Müllverbrennungsanlagen oder Stahlwerksschlacken in einem Konverter (1), bei welchem die schmelzflüssige Schlacke mit einem Metallbad (4) umgesetzt wird, wobei Kohlenstoff und Sauerstoff in das Metallbad (4) eingedüst werden, dadurch gekennzeichnet, daß der Konverter (1) in drei aneinander angrenzende und in offener Verbindung miteinander stehende Bereiche (2,3,5) unterteilt wird, wobei der Schlackenaufgabe benachbart ein Nachverbrennungsraum (2) mit wenigstens einer auf das Schlackenbad (16) gerichteten Sauerstofflanze (17) für eine Nachverbrennung angeordnet ist, über welche eine zirkulierende Strömung oberhalb des Schlackenbades (16) aufgebaut wird, daß an die Nachverbrennungszone (2) anschließend ein Metallbadsumpf (3) zur Umsetzung des Metallbades (4) mit der Schlacke und daß anschließend ein Absetzbereich (5) ausgebildet wird, aus welchem die heißen Verbrennungsabgase abgezogen werden und die Schlackenschmelze (16) abgezogen wird.

2. Verfahren nach Anspruch 1, dadurch gekennzeichnet, daß die in den Nachverbrennungsraum (2) mündenden Lanzen als wassergekühlte Lanzen (17) mit einer aufgesetzten Laval-Düse ausgebildet sind und daß mit dem über die Lanzen (17) auf das Schlackenbad (16) aufgeblasenen Sauerstoff für die Nachverbrennung über Injektorwirkung eine um die Achse der Lanze (17) zentrierte Kreislaufströmung des Partikelstromes über dem Schlackenbad (16) eingestellt wird.

3. Verfahren nach Anspruch 1 oder 2, dadurch gekennzeichnet, daß über die Aufblaslanzen (17) Filterstaub aus der Abgasreinigung (20) der Konverterabgase rückgeführt wird.

4. Verfahren nach Anspruch 1, 2 oder 3, dadurch gekennzeichnet, daß eine Teilmenge der Filterstäube mit hohem Resteisengehalt unmittelbar in das Metallbad (4) eingedüst wird.

**5.** Verfahren nach einem der Ansprüche 1 bis 4, dadurch gekennzeichnet, daß in den Nachverbrennungsraum (2) in einem Heißzyklon (12) abgeschiedene Feststoffe aus den Konverterabgasen rückgeführt werden.

**6.** Verfahren nach einem der Ansprüche 1 bis 5, dadurch gekennzeichnet, daß die Konverterabgase mit Additiven, wie $Al_2O_3$, $SiO_2$ oder Schlackengranulaten in einem Schwebegas- oder Wirbelschichtwärmetauscher (10) gekühlt werden und nachfolgend aus dem Zyklon (12) abgeschieden und auf das Schlackenbad (16) rückgeführt werden.

**7.** Verfahren nach einem der Ansprüche 1 bis 6, dadurch gekennzeichnet, daß eine Teilmenge des CO und $H_2$-haltigen gereinigten Konverterabgases über Bodendüsen (26) in das Schlackenbad (16) im Nachverbrennungsraum (2) eingedüst wird.

**8.** Verfahren nach Anspruch 7, dadurch gekennzeichnet, daß die Bodendüsen (26) in der Nachverbrennungszone (2) mit einem Druck zwischen 4 und 12 bar betrieben werden.

## Revendications

**1.** Procédé de retraitement de résidus de combustion ou de scories provenant d'installations d'incinération d'ordures ou de scories d'aciéries dans un convertisseur (1), selon lequel les scories liquides en fusion sont mises en réaction avec un bain de métal (4), du carbone et de l'oxygène étant alors injectés dans le bain de métal (4), caractérisé en ce que le convertisseur (1) est subdivisé en trois zones (2, 3, 5) qui sont contiguës et en liaison ouverte les unes avec les autres, une chambre de postcombustion (2) étant disposée au voisinage de l'entrée de chargement des scories et comportant au moins une lance à oxygène (17) qui est dirigée sur le bain de scories (16), pour une postcombustion, et par l'intermédiaire de laquelle est établi un écoulement en circulation au-dessus du bain de scories (16), en ce qu'à la suite de la zone de postcombustion (2) est formé un bassin (3) pour le bain de métal en vue de la mise en réaction du bain de métal (4) avec les scories, et en ce qu'à la suite est formée une zone de décantation (5) de laquelle les gaz d'échappement chauds de la combustion sont soutirés et la masse de scories en fusion (16) est soutirée.

**2.** Procédé selon la revendication 1, caractérisé en ce que les lances débouchant dans la chambre de postcombustion (2) sont réalisées sous forme de lances (17) refroidies par eau, sur lesquelles est rapporté un injecteur de Laval, et en ce que l'on établit par un effet d'injecteur, avec l'oxygène soufflé par l'intermédiaire des lances (17) sur le bain de scories (16) pour la postcombustion, un écoulement en boucle, centré autour de l'axe de la lance (17), du courant de particules au-dessus du bain de scories (16).

**3.** Procédé selon la revendication 1 ou 2, caractérisé en ce que par l'intermédiaire des lances de soufflage (17), on recycle la poussière de filtre issue de l'épuration (20) des gaz d'échappement du convertisseur.

**4.** Procédé selon la revendication 1, 2 ou 3, caractérisé en ce qu'une partie des poussières de filtre à forte teneur en fer résiduel est injectée directement dans le bain de métal (4).

**5.** Procédé selon l'une des revendications 1 à 4, caractérisé en ce que l'on recycle dans la chambre de postcombustion (2), des substances solides en provenance des gaz d'échappement du convertisseur, qui ont été séparées dans un cyclone à chaud (12).

**6.** Procédé selon l'une des revendications 1 à 5, caractérisé en ce que les gaz d'échappement du convertisseur, avec des additifs tels que $Al_2O_3$, $SiO_2$ ou des granulés de scories, sont refroidis dans un échangeur de chaleur (10) à mise en suspension dans les gaz ou à lit fluidisé et sont ensuite séparés du cyclone (12), et renvoyés sur le bain de scories (16).

**7.** Procédé selon l'une des revendications 1 à 6, caractérisé en ce qu'une partie des gaz d'échappement du convertisseur, purifiés et contenant du CO et du $H_2$, est injectée par l'intermédiaire d'injecteurs de fond (26) dans le bain de scories (16), dans la chambre de postcombustion (2).

**8.** Procédé selon la revendication 7, caractérisé en ce que les injecteurs de fond (26), dans la zone de postcombustion (2), fonctionnent avec une pression entre 4 et 12 bar.

## Claims

**1.** A process for working up incineration residues or slags from waste incineration plants or steel works slags in a converter (1), wherein the molten slag is reacted with a metal bath (4) with carbon and oxygen being nozzled into the metal bath (4), characterized in that the converter (1) is subdivided into three adjacent zones (2, 3, 5) in mutual open communication, wherein in the vicinity of the slag charging means an afterburning space (2) comprising at least one oxygen lance (17) directed onto the slag bath (16) is arranged for afterburning, via which lance a circulating flow is being built up above the slag bath (16), that following the afterburning zone (2) a metal bath sump (3) is formed for reacting the metal bath (4) with the slag and that, after this, a settling zone (5) is formed, from which the hot combustion offgases are drawn off and the slag melt (16) is drawn off.

2. A process according to claim 1, characterized in that the lances running into the afterburning space (2) are designed as water-cooled lances (17) each having a Laval nozzle slipped on and that a circulatory flow of the particle stream centered about the axis of the lance (17) is adjusted by injector effect above the slag bath (16) by aid of the oxygen blown onto the slag bath (16) via the lances (17) for afterburning.

3. A process according to claim 1 or 2, characterized in that filter dust is recycled from the offgas purification (20) of the converter offgases via the top-blowing lances (17).

4. A process according to claim 1, 2 or 3, characterized in that a partial amount of the filter dusts having high residual iron contents is nozzled directly into the metal bath (4).

5. A process according to any one of claims 1 to 4, characterized in that solids separated from the converter offgases in a hot cyclone (12) are recycled into the afterburning space (2).

6. A process according to any one of claims 1 to 5, characterized in that the converter offgases are cooled in a floating gas or fluidized bed heat exchanger (10) with additives such as $Al_2O_3$, $SiO_2$ or slag granulates and subsequently are separated from the cyclone (12) and recycled onto the slag bath (16).

7. A process according to any one of claims 1 to 6, characterized in that a partial amount of the purified converter offgas containing CO and $H_2$ is nozzled into the slag bath (16) in the afterburning space (2) via bottom nozzles (26).

8. A process according to claim 7, characterized in that the bottom nozzles (26) in the afterburning zone (2) are operated at a pressure of between 4 and 12 bars.

FIG.1

**FIG. 2**